(19) **Europäisches Patentamt / European Patent Office / Office européen des brevets**

(11) **EP 4 075 182 B1**

(12) **FASCICULE DE BREVET EUROPEEN**

(45) Date de publication et mention
de la délivrance du brevet:
**15.11.2023 Bulletin 2023/46**

(21) Numéro de dépôt: **22165973.3**

(22) Date de dépôt: **31.03.2022**

(51) Classification Internationale des Brevets (IPC):
**G02B 26/08** *(2006.01)* **G01S 7/481** *(2006.01)*
**G01S 17/89** *(2020.01)* **G02B 5/04** *(2006.01)*
**G02B 27/14** *(2006.01)*

(52) Classification Coopérative des Brevets (CPC):
**G02B 26/0833; G01S 7/4817; G01S 17/42;
G02B 5/045; G02B 27/144**

(54) **SCANNER OPTIQUE**

OPTISCHER SCANNER

OPTICAL SCANNER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.04.2021 FR 2103742**

(43) Date de publication de la demande:
**19.10.2022 Bulletin 2022/42**

(73) Titulaire: **Commissariat à l'énergie atomique
et aux énergies alternatives
75015 Paris (FR)**

(72) Inventeurs:
• **MOLLARD, Laurent
38054 GRENOBLE CEDEX 09 (FR)**
• **DIEPPEDALE, Christel
38054 GRENOBLE CEDEX 09 (FR)**
• **FREY, Laurent
38054 GRENOBLE CEDEX 09 (FR)**
• **GIRARD, Olivier
38054 GRENOBLE CEDEX 09 (FR)**

(74) Mandataire: **Brevalex
Tour Trinity
1 B Place de la Défense
92400 Courbevoie (FR)**

(56) Documents cités:
**EP-A1- 3 489 716       FR-A1- 3 055 702
US-A1- 2019 107 622**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 075 182 B1

**Description**

**DOMAINE TECHNIQUE**

La présente invention se rapporte au domaine des systèmes optiques et/ou optroniques. Plus particulièrement, l'invention se rapporte au domaine de l'imagerie, par exemple de scènes, ou de la détection.

Plus particulièrement, l'invention concerne un scanner optique muni d'un miroir pourvu d'une structuration en face arrière et destinée à imposer une déflexion à un rayonnement transmis par ladite face arrière par rapport à un rayonnement incident sur la face avant.

**ÉTAT DE LA TECHNIQUE ANTÉRIEURE**

Les micro-miroirs sont aujourd'hui largement présents dans le domaine des MEMS (Microsystèmes électromécaniques) et en particulier dans les dispositifs de type LIDAR (« Light Détection And Ranging systems », i.e. « détection et estimation de la distance par laser »).

Ces derniers permettent notamment de balayer une surface ou une cible avec un rayonnement lumineux à des fins de détection ou d'imagerie.

À cet égard, dans ces dispositifs de type LIDAR, les micro-miroirs sont agencés pour osciller selon un ou deux axe(s) pivot(s), à une fréquence de balayage prédéterminée, de manière à réfléchir un rayonnement incident selon différentes directions.

La fréquence de balayage des micro-miroirs peut varier de quelques Hz à plusieurs kHz, et leur taille peut être de l'ordre de plusieurs dizaines de micromètres à plusieurs millimètres (par exemple quelques millimètres de diamètre pour des micro-miroirs en forme de disque), et peut notamment être comprise entre 500 $\mu$m et 10 mm.

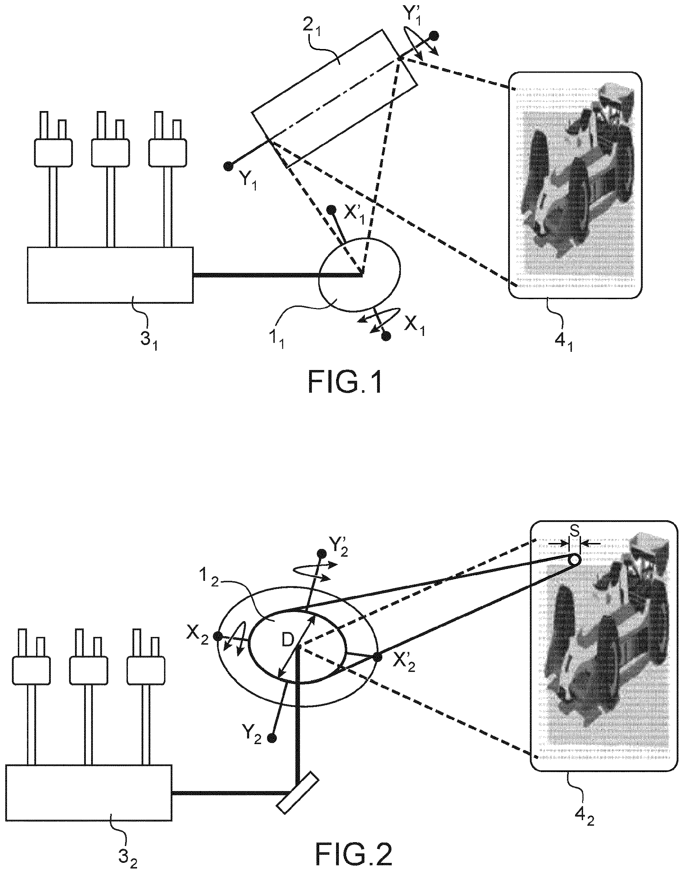

La figure 1 (extraite du document [1] cité à la fin de la description) illustre une première architecture possible d'un dispositif pourvu de deux micro-miroirs, dits respectivement premier micro-miroir $1_1$ et deuxième micro-miroir $2_1$, agencés pour pivoter autour, respectivement, d'un premier axe pivot $X_1X_1$' et d'un deuxième axe pivot $Y_1Y_1$' non parallèles. En particulier, ces deux micro-miroirs $1_1$ et $2_1$ sont agencés de sorte qu'un faisceau lumineux émis par une source lumineuse $3_1$ soit réfléchi par le premier micro-miroir $1_1$ en direction du deuxième micro-miroir $2_1$ qui le réfléchit à son tour en direction, par exemple, d'un écran $4_1$. La rotation de chacun des micro-miroirs $1_1$ et $2_1$ autour de leur axe pivot respectif permet ainsi d'effectuer un balayage d'une surface avec le faisceau lumineux, par exemple, à des fins d'imagerie ou de détection.

Une telle architecture n'est cependant pas satisfaisante.

En effet, cette architecture requiert un alignement précis des deux micro-miroirs, et est, par voie de conséquence, difficile à réaliser.

Une deuxième architecture, illustrée à la figure 2 (extraite du document [1] cité à la fin de la description), peut être envisagée. Cette dernière met en oeuvre un unique micro-miroir $1_2$ monté pivotant autour de deux axes pivot $X_2X_2$' et $Y_2Y_2$' non parallèles. L'oscillation de ce micro-miroir $1_2$ autour de l'un et l'autre des deux axes pivots $X_2X_2$' et $Y_2Y_2$' permet ainsi de balayer la surface d'un écran $4_2$ au moyen d'un faisceau lumineux issue d'une source lumineuse $3_2$ et réfléchie par ledit micro-miroir $1_2$.

Toutefois, cette deuxième architecture n'est pas non plus satisfaisante.

Cette dernière, bien que plus simple à intégrer, ne permet pas, dans certains cas, de balayer avec le faisceau lumineux des surfaces de grande étendue. Les documents EP3 489 716, US2019/0107622 et FR 3 055 702 présent des scanners pour LIDAR connus.

Un but de la présente invention est de proposer un nouveau dispositif réflecteur et en particulier un dispositif susceptible de balayer une surface d'une étendue plus importante que les dispositifs connus de l'état de la technique.

**EXPOSÉ DE L'INVENTION**

Le but est ainsi atteint par un scanner otique qui comprend :

- un miroir, pourvu d'une face avant, essentiellement plane, et d'une face arrière, ledit miroir étant monté pivotant autour d'un premier axe pivot et est transparent ou partiellement transparent au rayonnement lumineux depuis sa face avant jusque vers sa face arrière ou entre sa face avant jusque vers sa face arrière ;
- une source lumineuse destinée à émettre un rayonnement lumineux incident sur la face avant du miroir, et le miroir étant partiellement transparent de sa face avant vers sa face arrière au rayonnement lumineux ;

le scanner est caractérisé en ce que la face arrière comprend une structuration formée d'au moins une facette essentiellement plane et inclinée par rapport à la face avant de sorte qu'un rayonnement lumineux, incident sur le miroir du côté de la face avant, et transmis par l'au moins une facette subisse une déflexion par rapport à l'angle d'incidence dudit rayonnement lumineux sur la face avant.

Selon un mode de réalisation particulier, le premier axe pivot s'étend dans une première direction parallèle à un plan principal de la face avant.

Selon un mode de réalisation, ledit scanner comprend en outre un premier actionneur destiné à imposer une rotation du miroir autour du premier axe pivot.

Selon un mode de réalisation, le miroir est également monté pivotant autour d'un deuxième axe pivot perpendiculaire au premier axe pivot, le deuxième axe s'étendant dans une deuxième direction parallèle audit plan principal de la face avant.

Selon un mode de réalisation, ledit scanner comprend en outre un deuxième actionneur destiné à imposer une rotation du miroir autour du deuxième axe pivot.

Selon un mode de réalisation, la face arrière présente une forme concave.

Selon un mode de réalisation, l'au moins une facette comprend une pluralité de facettes agencées selon une rangée.

Selon un mode de réalisation, les facettes sont agencées de sorte à former un profil périodique, en dents de scie, avantageusement la périodicité du profil périodique en dents de scie est comprise entre 50 $\mu$m et 100 $\mu$m, et d'une profondeur de dents comprise entre 5 $\mu$m et 10$\mu$m.

Selon un mode de réalisation, la face avant est partiellement réfléchissante de sorte que le rayonnement lumineux susceptible d'être émis par la source lumineuse est pour partie réfléchi par ladite face avant et pour partie transmis par la face arrière.

Selon un mode de réalisation, la face avant est recouverte d'une couche partiellement réfléchissante qui comprend un empilement de Bragg, l'empilement de Bragg comprenant au moins un empilement de Bragg élémentaire.

Selon un mode de réalisation, un empilement de Bragg élémentaire comprend un empilement de deux couches diélectriques et/ou semi-conductrices d'indices différents, avantageusement un empilement de Bragg élémentaire comprend une couche de silicium amorphe et une couche d'oxyde de silicium.

Selon un mode de réalisation, l'empilement de Bragg est limité à un ou deux empilements de Bragg élémentaires.

Selon un mode de réalisation, la zone transparente ou partiellement transparente comprend un substrat support formant ladite face arrière, et dans lequel la face avant est formée d'une couche réfléchissante ajourée dotée d'au moins une ouverture dévoilant le substrat support ou est formée d'une couche réfléchissante reposant sur une partie d'une face supérieure du substrat support.

Selon un mode de réalisation, le miroir comprend du silicium.

Selon un mode de réalisation, le rayonnement lumineux susceptible d'être émis par la source lumineuse présente une longueur d'onde égale à 1550 nm.

## BRÈVE DESCRIPTION DES DESSINS

D'autres caractéristiques et avantages apparaîtront dans la description qui va suivre d'un scanner optique selon l'invention, donnés à titre d'exemples non limitatifs, en référence aux dessins annexés dans lesquels :

La figure 1 illustre une première architecture d'un dispositif de balayage lumineux connu de l'état de la technique, et notamment du document [1] cité à la fin de la description, le dispositif comprend notamment deux micro-miroirs montés pivotant chacun autour d'un axe pivot différent et non parallèles ;

La figure 2 illustre une deuxième architecture d'un dispositif de balayage lumineux connu de l'état de la technique, et notamment du document [1] cité à la fin de la description, le dispositif comprend notamment un micro-miroir monté pivotant autour de deux axes pivot différents et non parallèles ;

Les figures 3A, 3B, 3C sont des représentations schématiques en perspective de différents exemples de réalisation d'un miroir ;

La figure 4 est une représentation schématique selon un plan de coupe perpendiculaire à la face avant et au premier axe pivot d'un miroir susceptible d'être mis en oeuvre dans le cadre de la présente invention ;

La figure 5 est une représentation graphique de la variation des angles $\theta$t et $\theta$r (axe vertical) en fonction de l'angle d'incidence $\theta$i (axe horizontal) susceptible d'être obtenu avec un miroir fait de silicium (d'indice de réfraction n égal à 3,48 à la longueur d'onde 1,55 $\mu$m) et d'angle $\beta$ = 11° ;

La figure 6 est une représentation graphique de la variation des angles $\theta$t et $\theta$r (axe vertical) en fonction de l'angle d'incidence $\theta$i (axe horizontal) susceptible d'être obtenu avec un miroir fait de verre (d'indice de réfraction n égal à 1,55 à la longueur d'onde 1,55 $\mu$m) et d'angle $\beta$ = 26 ;

La figure 7 est une représentation schématique, en perspective, d'un miroir monté pivotant autour d'un premier axe pivot et d'un deuxième axe pivot ;

La figure 8 est une représentation schématique selon un plan de coupe perpendiculaire à la face avant et au premier axe pivot d'un miroir pourvu d'une pluralité de facettes et susceptible d'être mis en oeuvre dans le cadre de la présente invention ;

Les figures 9a, 9b, 9c, 9d, 9e, 9f, 9g sont des représentations schématiques illustrant un deuxième procédé de fabrication d'un miroir susceptible d'être mis en oeuvre dans le cadre de la présente invention ;

Les figures 10a, 10b, 10c sont des représentations schématiques illustrant la formation de la structuration dans le cadre du deuxième procédé de fabrication ;

La figure 11 est une représentation schématique d'un miroir de forme concave susceptible d'être mis en oeuvre dans le cadre de la présente invention.

## EXPOSÉ DÉTAILLÉ DE MODES DE RÉALISATION PARTICULIERS

La présente invention concerne un scanner optique pourvu d'un miroir qui présente une face avant essentiellement plane, cette face avant s'étend ainsi selon un plan P donné appelé « plan principal » et une face arrière (opposée à la face avant) structurée. Notamment, la structuration de la face arrière du miroir est adaptée pour qu'un rayonnement traversant le miroir de la face avant vers la face arrière subisse une déflexion par rapport à l'angle d'incidence dudit rayonnement sur la face avant. A cet égard, la structuration peut comprendre au moins une facette essentiellement plane et inclinée par rapport à la face avant et donc au plan principal P. Ainsi, la mise en rotation du miroir permet d'effectuer un balayage en angle avec le rayonnement transmis.

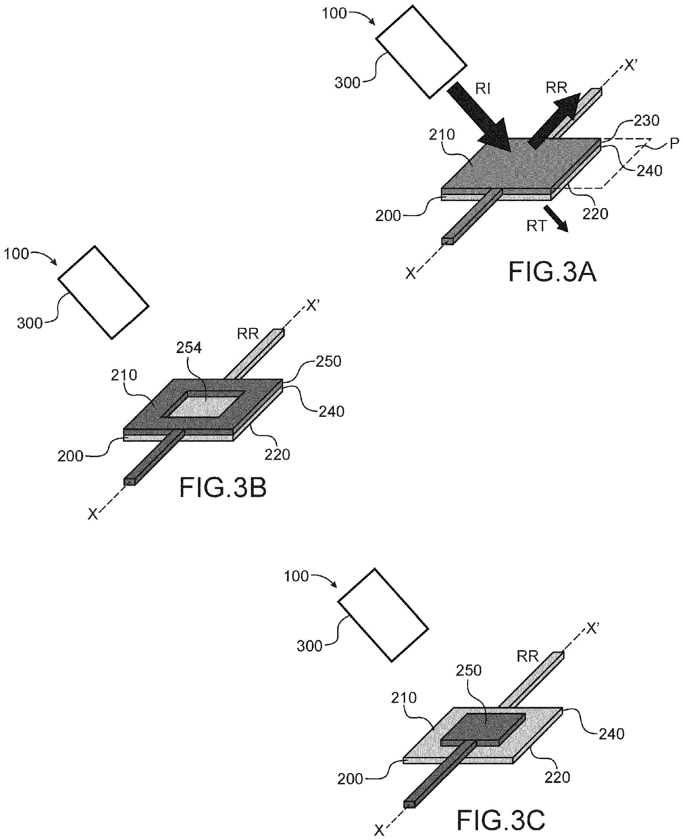

La figure 3A est une représentation schématique d'un scanner optique 100 selon un exemple de réalisation de la présente invention.

Le scanner optique 100 comprend notamment un miroir 200 monté pivotant autour d'un premier axe pivot XX'.

Le miroir 200 comprend à cet égard une face avant 210, essentiellement plane, et une face arrière 220 opposée à la face avant 210.

Le scanner optique 100 comprend en outre une source lumineuse 300 destinée à émettre un rayonnement lumineux incident sur la face avant 210 du miroir 200. La source lumineuse 300 peut avantageusement être une source monochromatique, par exemple une source laser ou une diode électroluminescente. La longueur d'onde du rayonnement émis par la source lumineuse peut par exemple être égale à 1550 nm.

Dans cet exemple, le miroir 200 est partiellement transparent au rayonnement lumineux émis par la source lumineuse 300. En d'autres termes, un rayonnement lumineux incident (dit rayonnement incident, et noté « RI »), selon un angle d'incidence $\theta_i$, sur la face avant 210 du miroir 200 traverse ce dernier à partir de la face avant 210 et en ressort, sous forme d'un rayonnement transmis (noté « RT »), par la face arrière 220.

Par ailleurs, la face avant 210 peut être partiellement réfléchissante de sorte que la réflexion du rayonnement incident produit également un rayonnement réfléchi RR (figure 3A).

A cet égard, le miroir 200 peut comprendre une couche partiellement réfléchissante 230 reposant sur une face principale d'un substrat support 240. Une face de la couche partiellement réfléchissante 230 forme alors la face avant 210 du miroir. Plus particulièrement, le miroir 200 peut comprendre de sa face avant 210 vers sa face arrière 220, la couche partiellement réfléchissante 230 et un substrat support 240. La couche partiellement réfléchissante 230 et le substrat support 240 peuvent présenter, chacun, un coefficient d'absorption négligeable, voire nul, dans le domaine de longueurs d'onde couvert par le rayonnement incident.

Selon un mode de réalisation avantageux, la couche partiellement réfléchissante 230, peut elle-même comprendre un empilement de Bragg (ou miroir de Bragg) formé par au moins un empilement de Bragg élémentaire. Par « empilement de Bragg », on entend une succession périodique de couches transparentes, ou partiellement transparentes, et d'indices de réfraction différents. Un empilement de Bragg élémentaire comprend un empilement de deux couches diélectriques et/ou semi-conductrices.

Plus particulièrement, le miroir 200 peut être formé, de sa face avant 210 vers sa face arrière 220, de la couche partiellement réfléchissante 230 et du substrat support 240, la couche partiellement réfléchissante 230 et le substrat support 240 pouvant présenter, chacun, un coefficient d'absorption négligeable, voire nul, dans le domaine de longueurs d'onde couvert par le rayonnement incident. Le dispositif fonctionne encore même si une partie assez importante de la lumière est absorbée dans le substrat 240, par exemple environ 50%. Pour un substrat aminci de 50 $\mu$m à 100 $\mu$m d'épaisseur, cela correspond à un coefficient d'extinction k=10^-3 ou à un coefficient d'absorption de l'ordre de 100cm-1.

En particulier, dès lors que le rayonnement lumineux incident considéré est dans le domaine infrarouge, et plus particulièrement d'une longueur d'onde égale à 1550 nm, l'empilement de Bragg élémentaire peut comprendre une couche de dioxyde de silicium d'une épaisseur de 268 nm (dont l'indice de réfraction à 1550 nm vaut 1,45) recouverte d'une couche de silicium amorphe d'une épaisseur de 113 nm (dont l'indice de réfraction à 1550 nm vaut 3,42). Selon cette configuration, un empilement de Bragg comprenant un unique empilement de Bragg élémentaire, présente, pour une incidence comprise entre 0° et 20°, un coefficient de réflexion égal à 88,8 % et un coefficient de transmission égale à 11 % face à un faisceau lumineux principal de longueur d'onde égale à 1550 nm. Cet empilement n'est, par ailleurs, que peu voire pas absorbant, et présentera, par voie de conséquence, un échauffement quasi nul.

La limitation du nombre d'empilements de Bragg élémentaires permet de réduire les contraintes mécaniques imposées au miroir, et ainsi prévenir toute déformation (par exemple incurvation) dudit miroir.

Par ailleurs, le dimensionnement de l'empilement de Bragg élémentaire permet d'ajuster la réflectivité dans la gamme de longueurs d'ondes couverte par le rayonnement lumineux incident.

Selon une variante, le miroir 200 peut comprendre une couche réfléchissante 250 ajourée reposant sur une portion d'une face supérieure du substrat support 240 en un matériau transparent à la longueur d'onde incidente. La couche réfléchissante 250 comporte ainsi une ou plusieurs ouvertures dévoilant le substrat support 240 dont le coefficient d'absorption est négligeable, dans le domaine de longueurs d'onde couvert par le rayonnement incident.

Dans l'exemple de réalisation illustré sur la figure 3B, une ouverture centrale 254 traverse la couche réfléchissante 250 et s'étend jusqu'à la face supérieure du substrat support 240. Selon une variante (non représentée) plusieurs ouvertures traversent la couche réfléchissante 250 et dévoilent le substrat support 240.

La couche réfléchissante 250 peut être en un matériau métallique tel que par exemple de l'or ou du l'aluminium.

Selon une variante illustrée sur la figure 3C, le miroir 200 comprend une couche réfléchissante 250 reposant sur portion seulement de la face supérieure du substrat support 240 en un matériau transparent à la longueur d'onde incidente (figure 3C).

Le substrat support 240 peut, pour sa part, comprendre un matériau semi-conducteur et plus particulièrement du silicium.

Dans l'un ou l'autre des exemples des figures 3B, 3C, la face avant 210 du miroir 200 est formée par la couche réfléchissante 250.

Dans l'un ou l'autre des exemples décrits précédemment, la face arrière 220 du miroir peut être formée par la face inférieure du substrat support 240 opposée à ladite face supérieure de ce dernier.

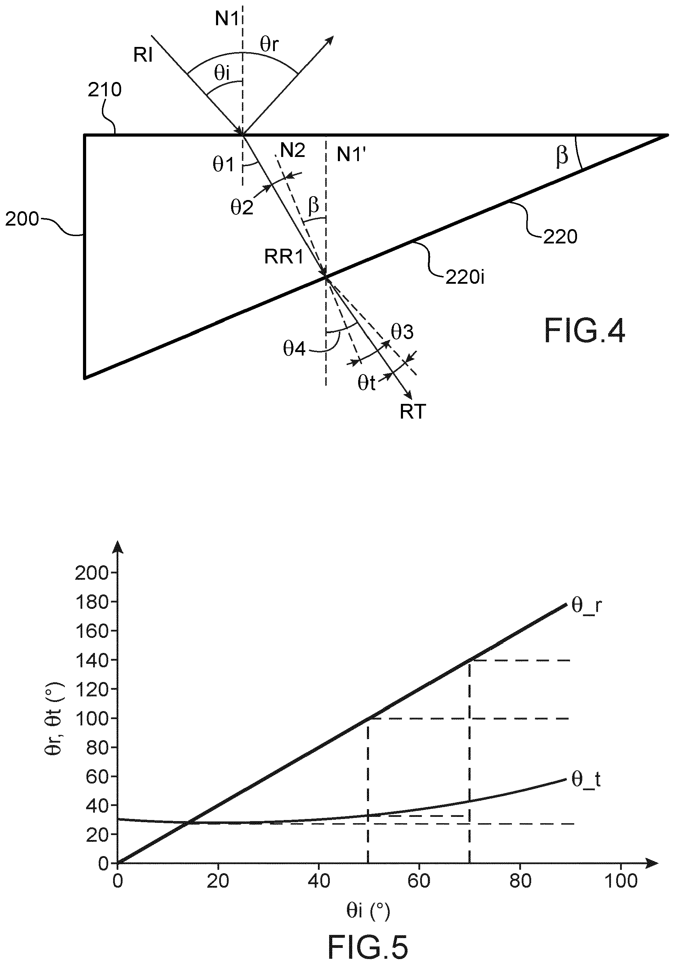

Dans l'un ou l'autre des exemples décrits précédemment, le miroir 200 est doté d'au moins une zone transparente ou partiellement transparente au rayonnement lumineux agencée entre la face avant et la face arrière du miroir. Dans l'exemple de réalisation de la figure 3A, cette zone transparente ou partiellement transparente est formée par la couche 230 et le substrat 240 et s'étend de la face avant 210 jusqu'à la face arrière 230 du miroir. En variante, la zone transparente ou partiellement transparente peut s'étendre depuis une région située entre la face avant et la face arrière, jusque vers la face arrière. Dans l'exemple de réalisation particulier des figures 3B et 3C, cette zone est ainsi formée par le substrat 240. Par ailleurs, la face arrière 220 est structurée pour imposer une déflexion un rayonnement transmis RT par rapport au rayonnement incident RI. Tel qu'illustré à la figure 4, la structuration peut comprendre au moins une facette 220i essentiellement plane et inclinée d'un angle $\beta$ par rapport à la face avant 210.

Ainsi, selon cette configuration, le rayonnement incident RI, incident sur la face avant 210 selon un angle d'incidence $\theta i$ par rapport à la normale N1 de la face avant 200, subit une première réfraction lorsqu'il traverse la face avant 210 pour former un rayonnement réfracté RR1. Le rayonnement réfracté RR1 forme alors un angle de réfraction $\theta 1$ par rapport à la normale N1 qui vérifie la relation (1) suivante :

$$\sin(\theta i) = n \, \sin(\theta 1) \tag{1}$$

n étant l'indice de réfraction du miroir.

Ce même rayonnement réfracté RR1 forme un angle $\theta 2$ par rapport à la normale N2 de la face arrière 220, et un angle $\theta 2 + \beta$ avec la direction N1' parallèle à la normale N1.

Par conséquent, l'angle $\theta 2$ suit la relation (2) suivante :

$$\theta 2 = \theta 1 - \beta \tag{2}$$

Le rayonnement réfracté RR1 est, à son tour, réfracté par la face arrière 220 pour former le rayonnement transmis RT. Ce rayonnement transmis RT forme un angle $\theta 3$ avec la normale N2, et un angle $\theta 4$ avec la direction N1'. Par ailleurs, on note $\theta t$ l'angle formé entre le rayonnement transmis RT et le rayonnement incident RI.

Ainsi, la relation de Snell-Descartes permet d'écrire :

$$\sin(\theta 3) = n \, \sin(\theta 2) \tag{3}$$

Par ailleurs, les angles $\theta 4$ et $\theta t$ vérifient les relations suivantes :

$$\theta 4 = \theta 3 + \beta \qquad (4)$$

Et

$$\theta t = -(\theta 1 - \theta 4) \qquad (5)$$

Ainsi compte-tenu des relations (1) à (5), nous pouvons en déduire une relation entre $\theta t$ et $\theta i$ :

$$\theta t = -\theta i + \left( \beta + \sin^{-1} \left( n \sin \left( -\beta + \sin^{-1} \left( \frac{\sin(\theta i)}{n} \right) \right) \right) \right) \rightarrow (6)$$

Ainsi, la mise en oeuvre d'une facette 220i inclinée d'un angle $\beta$ par rapport à la face avant 210 permet ainsi d'imposer une déflexion du rayonnement transmis RT par rapport au rayonnement incident. Cette déflexion varie notamment en fonction de l'angle d'incidence $\theta i$ du rayonnement incident RI.

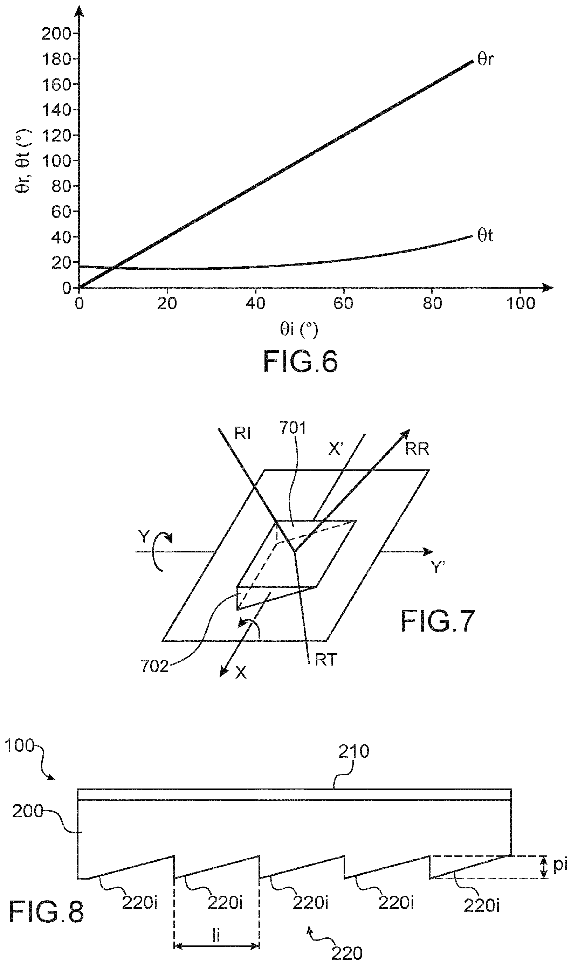

A cet égard, les figures 5 et 6 sont des représentations graphiques des angles $\theta t$ et $\theta r$ en fonction de l'angle d'incidence $\theta i$.

Notamment, la figure 5 représente la variation des angles $\theta t$ et $\theta r$ en fonction de l'angle d'incidence $\theta i$ d'un miroir 200 fait de silicium (d'indice de réfraction n égal à 3,48 à la longueur d'onde 1,55 $\mu$m) et d'angle $\beta$ = 11°. Selon cette représentation graphique, dès lors que l'angle d'incidence $\theta i$ varie entre 50° et 70°, la déflexion $\theta t$ du rayonnement transmis RT varie de 10°, tandis que l'angle $\theta r$ varie de 40 °.

De manière équivalente, la figure 6 représente la variation des angles $\theta t$ et $\theta r$ en fonction de l'angle d'incidence $\theta i$ d'un miroir 200 fait de verre (d'indice de réfraction n égal à 1,55 à la longueur d'onde 1,55 $\mu$m) et d'angle $\beta$ = 26°. Selon cette représentation graphique, dès lors que l'angle d'incidence $\theta i$ varie entre 50° et 70 °, la déflexion $\theta t$ du rayonnement transmis RT varie de 10 °, tandis que l'angle $\theta r$ varie de 40 °.

Ainsi, la rotation du miroir 200 autour du premier axe pivot XX' permet aux rayonnements réfléchis RR et transmis RT de balayer en angle deux zones distinctes, qui peuvent éventuellement présenter un recouvrement.

Selon un aspect avantageux (figure 7), le miroir 200 peut également être monté pivotant autour d'un deuxième axe pivot YY' perpendiculaire au premier axe pivot XX' et parallèle à une deuxième direction du plan formé par la face avant 210. Selon cet aspect, les rayonnements réfléchis RR et transmis RT peuvent, par rotation du miroir autour de l'un et l'autre du premier et du deuxième axe pivot, balayer chacun une surface.

Pour la rotation autour de l'axe XX' les faisceaux réfléchi et transmis balayent le plan YZ, tandis que pour la rotation autour de l'axe YY' le faisceau réfléchi balaye un plan XRR0, le faisceau transmis balaye un plan XRT0, RR0 et RT0 étant des directions des faisceaux réfléchi RR et transmis RT lorsque l'angle de rotation autour de l'axe YY' est nul, i.e. lorsque le rayon incident est dans le plan OYZ. Par conséquent, si on positionne un écran perpendiculairement à chacun des faisceaux réfléchi RR et transmis RT au départ, les rotations autour des axes XX' et YY' font décrire une croix aux points d'impact de ces deux faisceaux sur les deux écrans.

Dans l'exemple de réalisation particulier illustré sur la figure 7, le prisme a une forme de cylindre, en particulier de cylindre droit avec des faces 701, 702 qui sont parallèles entre elles. Un prisme doté de faces 701, 702 non-parallèles peut être en variante prévu.

De manière particulièrement avantageuse, le scanner optique 100 peut comprendre un premier et/ou un deuxième actionneur destinés à contrôler la rotation du miroir 200 autour, respectivement, du premier axe pivot XX' et du deuxième axe pivot YY'. Le premier et le deuxième actionneur peuvent comprendre au moins un des éléments choisi parmi : un actionneur électrostatique, un actionneur magnétique, un actionneur piézoélectrique, un actionneur thermique.

En variante de l'un ou l'autre des exemples décrits, on peut prévoir de faire pivoter le ou les miroirs selon un nombre d'axes pivots supérieur à deux. En variante de l'un ou l'autre des exemples décrits, on peut prévoir également un pivotement du miroir ou des miroirs selon un ou plusieurs axes réalisant un angle non-nul avec une parallèle au plan principal du miroir et à sa face avant, autrement dit selon un ou plusieurs axes non-parallèles à la face avant du miroir.

Selon un autre aspect illustré à la figure 8, la structuration de la face arrière 220 comprend une pluralité de facettes 220i agencées selon une rangée. En particulier, les facettes 220i peuvent être agencées de sorte à former un profil périodique, en dents de scie. De manière avantageuse, l'intervalle li entre deux dents du profil en dents de scie est comprise entre 50 $\mu$m et 100 $\mu$m, et la profondeur pi des dents comprise entre 5 $\mu$m et 10 $\mu$m.

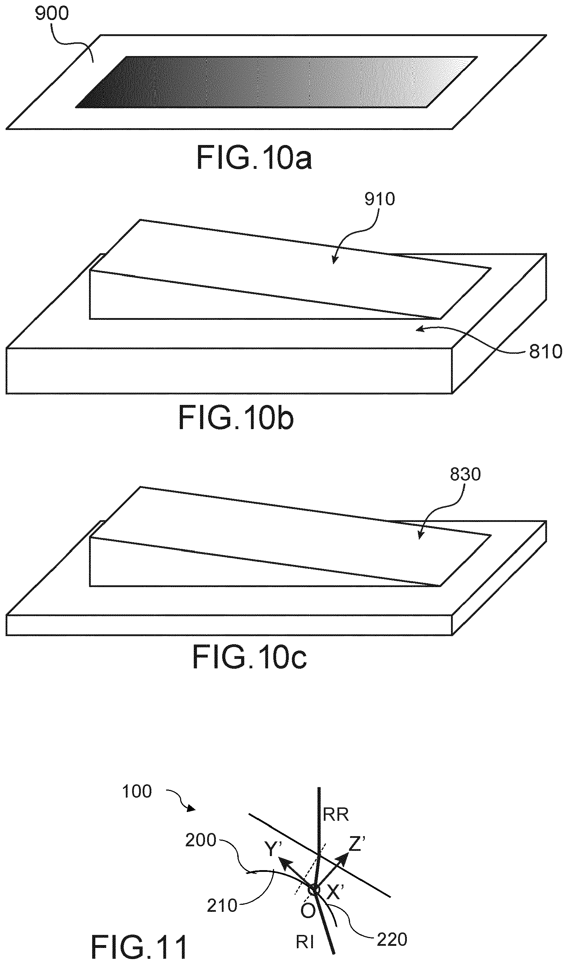

De manière complémentaire (figure 11), la face arrière 220 peut présenter une forme concave qui permet ainsi d'augmenter l'angle de balayage $\theta t$.

Ainsi, l'angle entre les faces d'entrée et de sortie varie selon la position sur l'axe OY' du repère orthogonal [O ;

X' ; Y' ; Z'] donné sur la figure 11. Lorsque l'angle d'incidence du faisceau sur la face d'entrée est faible par exemple inférieur à 10° et que le point d'impact du faisceau sur la face d'entrée est proche du point où les deux faces sont parallèles, la déviation du faisceau transmis est très faible, voire nulle si l'angle d'incidence est nul et le faisceau tombe sur le sommet de la forme concave. Lorsque l'on tourne le miroir autour de l'axe OX', l'angle d'incidence du faisceau sur la face avant augmente et le faisceau transmis par la face avant arrive sur la face arrière à une position qui s'éloigne du point où les deux faces sont parallèles. Ainsi l'angle d'incidence sur la face arrière augmente et la déviation augmente. Ceci permet d'augmenter la plage angulaire scannée en transmission.

L'invention concerne également un procédé de fabrication du scanner optique et plus particulièrement du miroir 200.

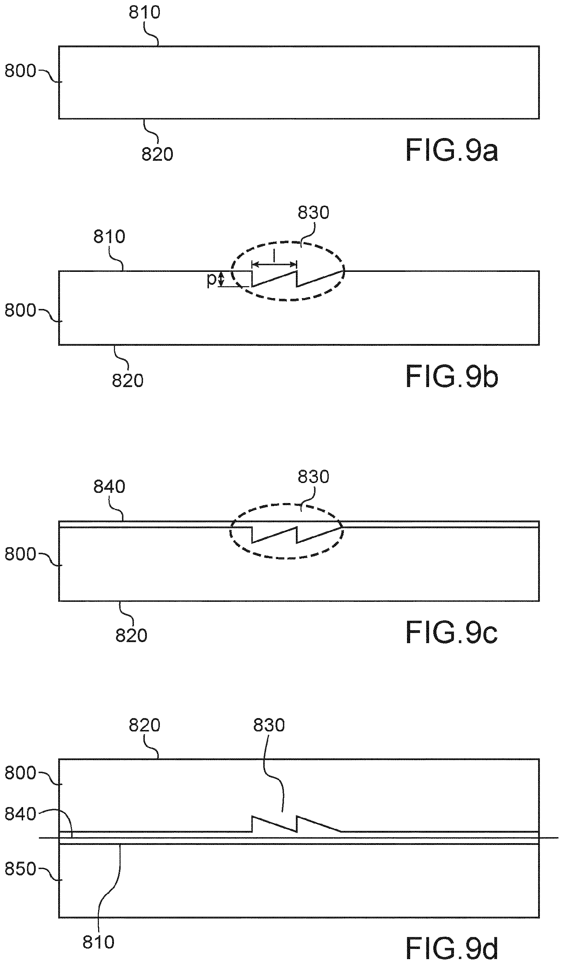

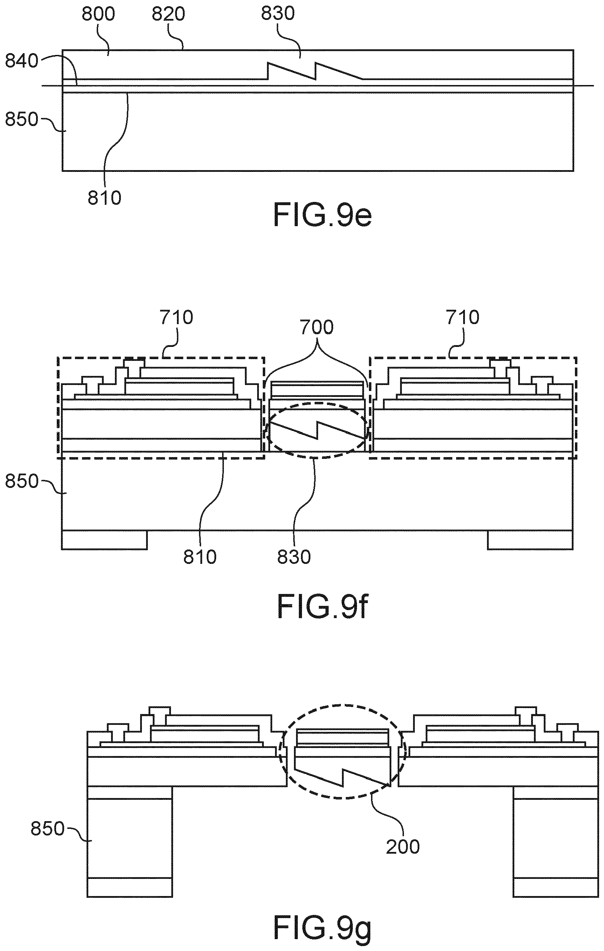

Le procédé comprend la fourniture d'un substrat 800 pourvu d'une face avant 810 et d'une face arrière 820 (figure 9a).

Une structuration en forme de signal triangulaire ou en dent de scie est ensuite formée à partir de la face avant 810. La formation de cette structuration peut impliquer la mise en oeuvre d'un masque en niveaux de gris 900 (figure 10a).

L'insolation d'une couche de résine 910 avec un tel masque, suivie de son développement confère à ladite résine un profil triangulaire (figure 10b).

Le profil triangulaire 830 de la face avant 810 résulte d'une gravure sèche suivie d'une étape de retrait de la résine. Le profil triangulaire peut présenter une période l comprise entre 50 $\mu$m et 100 $\mu$m, et une profondeur p comprise entre 5 $\mu$m et 10 $\mu$m.

La formation de la structuration est suivie d'une étape de formation d'une couche de $SiO_2$ par PECVD et d'une planarisation de ladite couche 840 (figures 9b et 9c). Cette couche présente notamment à l'issue de la planarisation une épaisseur supérieure à la profondeur p.

Le substrat 800 est ensuite assemblé avec un substrat receveur 850 par mise en contact de la couche de $SiO_2$ 840 avec une face principale du substrat receveur 850 (figure 9d). Cet assemblage peut comprendre un collage moléculaire suivi d'un traitement thermique destiné à renforcer l'interface de collage.

L'assemblage est alors suivi d'une étape d'amincissement, notamment d'amincissement mécanique, du substrat 800 (figure 9d).

Le deuxième procédé de fabrication comprend également des étapes de formation d'électrodes 710 et de tranchées 700 délimitant notamment le miroir 200 (figure 9e). Enfin, le deuxième procédé de fabrication comprend une étape de gravure par une face principale exposée du substrat receveur 850 destinée à libérer le miroir 200 (figure 9f).

Cette étape de gravure peut être réalisée par DRIE (pour « Deep Reactive Ion Etching » ou gravure ionique réactive profonde) de manière à conserver la structuration en face arrière du miroir 200. La couche de $SiO_2$ peut également être retirée du miroir 200.

## RÉFÉRENCES

[1] Sven Holmstrom et al., "MEMS laser scanners : a review", Journal of Microelectromechanical Systems · April 2014, DOI: 10.1109/JMEMS.2013.2295470.

## Revendications

1. Scanner optique (100) qui comprend :

   - un miroir (200), pourvu d'une face avant (210), essentiellement plane, et d'une face arrière (220), ledit miroir (200) étant monté pivotant autour d'un premier axe pivot et étant transparent ou partiellement transparent dans une zone entre ladite face avant (210) et jusqu'à ladite face arrière (220) ou depuis ladite face avant jusqu'à ladite face arrière ;
   - une source lumineuse (300) destinée à émettre un rayonnement lumineux incident sur la face avant (210) du miroir (200), et le miroir (200) étant partiellement transparent de sa face avant (210) vers sa face arrière (220) au rayonnement lumineux ;

   le scanner est **caractérisé en ce que** la face arrière (220) comporte une structuration formée d'au moins une facette essentiellement plane et inclinée par rapport à la face avant (210) de sorte qu'un rayonnement lumineux, incident sur le miroir (200) du côté de la face avant (210), et transmis par l'au moins une facette (220i) subisse une déflexion par rapport à un angle d'incidence dudit rayonnement lumineux sur la face avant (210).

**2.** Scanner selon la revendication 1, dans lequel la face avant (210), essentiellement plane s'étend selon un plan principal, le premier axe pivot suivant une première direction parallèle audit plan principal.

**3.** Scanner selon l'une des revendications 1 ou 2, dans lequel ledit scanner comprend en outre un premier actionneur destiné à imposer une rotation du miroir (200) autour du premier axe pivot.

**4.** Scanner selon l'une des revendications 1 à 3, dans lequel la face avant (210), essentiellement plane s'étend selon un plan principal et dans lequel le miroir (200) est également monté pivotant autour d'un deuxième axe pivot perpendiculaire au premier axe pivot, le deuxième axe pivot suivant une deuxième direction parallèle audit plan principal.

**5.** Scanner selon la revendication 4, dans lequel ledit scanner comprend un outre un deuxième actionneur destiné à imposer une rotation du miroir (200) autour du deuxième axe pivot.

**6.** Scanner selon l'une des revendications 1 à 5, dans lequel la face arrière (220) présente une forme concave.

**7.** Scanner selon l'une des revendications 1 à 6, dans lequel l'au moins une facette comprend une pluralité de facettes agencées selon une rangée.

**8.** Scanner selon la revendication 7, dans lequel les facettes sont agencées de sorte à former un profil périodique, en dents de scie, avantageusement la périodicité du profil périodique en dents de scie est compris entre 50 $\mu$m et 100 $\mu$m, et d'une profondeur de dents comprise entre 5 $\mu$m et 10 $\mu$m.

**9.** Scanner selon l'une des revendications 1 à 8, dans lequel la face avant (210) est partiellement réfléchissante de sorte que le rayonnement lumineux susceptible d'être émis par la source lumineuse (300) est pour partie réfléchi par ladite face avant (210) et pour partie transmis par la face arrière (220).

**10.** Scanner selon l'une des revendications 1 à 9, dans lequel la face avant (210) est formée d'une couche partiellement réfléchissante (230) qui comprend un empilement de Bragg, l'empilement de Bragg comprenant au moins un empilement de Bragg élémentaire.

**11.** Scanner selon la revendication 10, dans lequel l'empilement de Bragg élémentaire comprend un empilement de deux couches diélectriques et/ou semi-conductrices, avantageusement l'empilement de Bragg élémentaire comprend une couche de silicium amorphe et une couche d'oxyde de silicium.

**12.** Scanner selon l'une des revendications 10 ou 11, dans lequel l'empilement de Bragg est limité à un ou deux empilements de Bragg élémentaires.

**13.** Scanner selon l'une des revendications 1 à 8, dans lequel le miroir comprend un substrat support (240) formant ladite face arrière (220), et dans lequel la face avant (210) est formée d'une couche réfléchissante (250) ajourée dotée d'au moins une ouverture (254) dévoilant le substrat support (240) ou est formée d'une couche réfléchissante (250) reposant sur une partie d'une face supérieure du substrat support.

**14.** Scanner selon l'une des revendications 1 à 13, dans lequel le miroir (200) comprend du silicium.

**15.** Scanner selon l'une des revendications 1 à 14, dans lequel le rayonnement lumineux susceptible d'être émis par la source lumineuse (300) présente une longueur d'onde égale à 1550 nm.

**Patentansprüche**

**1.** Optischer Scanner (100), der Folgendes umfasst:

- einen Spiegel (200), der mit einer im Wesentlichen ebenen Vorderseite (210) und einer Rückseite (220) versehen ist, wobei der Spiegel (200) um eine erste Schwenkachse schwenkbar montiert ist und in einem Bereich zwischen der Vorderseite (210) bis zur Rückseite (220) oder von der Vorderseite bis zur Rückseite transparent oder teilweise transparent ist;
- eine Lichtquelle (300), die dazu bestimmt ist, eine auf die Vorderseite (210) des Spiegels (200) einfallende Lichtstrahlung zu emittieren, wobei der Spiegel (200) von seiner Vorderseite (210) zur Rückseite (220) für die Lichtstrahlung teilweise transparent ist;

wobei der Scanner **dadurch gekennzeichnet ist, dass** die Rückseite (220) eine Strukturierung aufweist, die aus mindestens einer Facette ausgebildet ist, die im Wesentlichen eben und gegenüber der Vorderseite (210) geneigt ist, so dass eine Lichtstrahlung, die auf den Spiegel (200) auf der Vorderseite (210) einfällt und von der mindestens einen Facette (220i) durchgelassen wird, eine Ablenkung in Bezug auf einen Einfallswinkel der Lichtstrahlung auf der Vorderseite (210) erfährt.

2. Scanner nach Anspruch 1, wobei sich die im Wesentlichen ebene Vorderseite (210) entlang einer Hauptebene erstreckt und die erste Schwenkachse einer ersten Richtung parallel zur Hauptebene folgt.

3. Scanner nach Anspruch 1 oder 2, wobei der Scanner ferner einen ersten Aktuator umfasst, der dazu bestimmt ist, eine Drehung des Spiegels (200) um die erste Schwenkachse zu bewirken.

4. Scanner nach einem der Ansprüche 1 bis 3, wobei sich die im Wesentlichen ebene Vorderseite (210) entlang einer Hauptebene erstreckt und wobei der Spiegel (200) auch um eine zweite Schwenkachse senkrecht zur ersten Schwenkachse schwenkbar montiert ist, wobei die zweite Schwenkachse einer zweiten Richtung parallel zur Hauptebene folgt.

5. Scanner nach Anspruch 4, wobei der Scanner ferner einen zweiten Aktuator umfasst, der dazu bestimmt ist, eine Drehung des Spiegels (200) um die zweite Schwenkachse zu bewirken.

6. Scanner nach einem der Ansprüche 1 bis 5, wobei die Rückseite (220) eine konkave Form aufweist.

7. Scanner nach einem der Ansprüche 1 bis 6, wobei die mindestens eine Facette eine Vielzahl von Facetten umfasst, die in einer Reihe angeordnet sind.

8. Scanner nach Anspruch 7, wobei die Facetten so angeordnet sind, dass sie ein sägezahnartiges periodisches Profil bilden, wobei die Periodizität des sägezahnartigen periodischen Profils vorteilhafterweise zwischen 50 $\mu$m und 100 $\mu$m beträgt und die Zahntiefe zwischen 5 $\mu$m und 10 $\mu$m beträgt.

9. Scanner nach einem der Ansprüche 1 bis 8, wobei die Vorderseite (210) teilweise reflektierend ist, so dass die Lichtstrahlung, die von der Lichtquelle (300) emittiert werden kann, teilweise von der Vorderseite (210) reflektiert und teilweise von der Rückseite (220) durchgelassen wird.

10. Scanner nach einem der Ansprüche 1 bis 9, wobei die Vorderseite (210) durch eine teilweise reflektierende Schicht (230) gebildet wird, die einen Bragg-Stapel umfasst, wobei der Bragg-Stapel mindestens einen elementaren Bragg-Stapel umfasst.

11. Scanner nach Anspruch 10, wobei der elementare Bragg-Stapel einen Stapel aus zwei dielektrischen und/oder Halbleiterschichten umfasst, wobei der elementare Bragg-Stapel vorteilhafterweise eine amorphe Siliziumschicht und eine Siliziumoxidschicht umfasst.

12. Scanner nach einem der Ansprüche 10 oder 11, wobei der Bragg-Stapel auf einen oder zwei elementare Bragg-Stapel beschränkt ist.

13. Scanner nach einem der Ansprüche 1 bis 8, wobei der Spiegel ein Trägersubstrat (240) umfasst, das die Rückseite (220) bildet, und wobei die Vorderseite (210) durch eine durchbrochene reflektierende Schicht (250) gebildet wird, die mit mindestens einer Öffnung (254) versehen ist, die das Trägersubstrat (240) freigibt, oder durch eine reflektierende Schicht (250) gebildet wird, die auf einem Abschnitt einer Oberseite des Trägersubstrats aufliegt.

14. Scanner nach einem der Ansprüche 1 bis 13, wobei der Spiegel (200) Silizium umfasst.

15. Scanner nach einem der Ansprüche 1 bis 14, wobei die Lichtstrahlung, die von der Lichtquelle (300) emittiert werden kann, eine Wellenlänge von 1550 nm aufweist.

**Claims**

1.  An optical scanner (100) which comprises:

    - a mirror (200), provided with a front face (210), essentially planar, and with a rear face (220), said mirror (200) being pivotally mounted about a first pivot axis and being transparent or partially transparent in an area between said front face (210) and up to said rear face (220) or from said front face up to said rear face;
    - a light source (300) intended to emit an incident light radiation on the front face (210) of the mirror (200), and the mirror (200) being partially transparent to the light radiation from its front face (210) towards its rear face (220);

    the scanner is **characterised in that** the rear face (220) includes a structuration formed by at least one facet essentially planar and inclined with respect to the front face (210) so that a light radiation, incident on the mirror (200) on the front face (210) side, and transmitted by the at least one facet (220i) undergoes a deflection with respect to an angle of incidence of said light radiation on the front face (210).

2.  The scanner according to claim 1, wherein the front face (210), essentially planar, extends according to a main plane, the first pivot axis along a first direction parallel to said main plane.

3.  The scanner according to one of claims 1 or 2, wherein said scanner further comprises a first actuator intended to impart a rotation of the mirror (200) about the first pivot axis.

4.  The scanner according to one of claims 1 to 3, wherein the front face (210), essentially planar, extends according to a main plane and wherein the mirror (200) is also pivotally mounted about a second pivot axis perpendicular to the first pivot axis, the second pivot axis along a second direction parallel to said main plane.

5.  The scanner according to claim 4, wherein said scanner further comprises a second actuator intended to impart a rotation of the mirror (200) about the second pivot axis.

6.  The scanner according to one of claims 1 to 5, wherein the rear face (220) has a concave shape.

7.  The scanner according to one of claims 1 to 6, wherein the at least one facet comprises a plurality of facets arranged according to a row.

8.  The scanner according to claim 7, wherein the facets are arranged so as to form a sawteeth-like periodic profile, advantageously the periodicity of the sawteeth-like periodic profile is comprised between 50 $\mu$m and 100 $\mu$m, and with a teeth depth comprised between 5 $\mu$m and 10 $\mu$m.

9.  The scanner according to one of claims 1 to 8, wherein the front face (210) is partially reflective so that the light radiation that could be emitted by the light source (300) is partially reflected by said front face (210) and partially transmitted by the rear face (220).

10. The scanner according to one of claims 1 to 9, wherein the front face (210) is formed by a partially reflective layer (230) which comprises a Bragg stack, the Bragg stack comprising at least one elementary Bragg stack.

11. The scanner according to claim 10, wherein the elementary Bragg stack comprises a stack of two dielectric and/or semiconductor layers, advantageously the elementary Bragg stack comprises an amorphous silicon layer and a silicon oxide layer.

12. The scanner according to claim 10, wherein the Bragg stack is limited to one or two elementary Bragg stack(s).

13. The scanner according to one of claims 1 to 8, wherein the mirror comprises a support substrate (240) forming said rear face (220), and wherein the front face (210) is formed by an apertured reflective layer (250) provided with at least one opening (254) exposing the support substrate (240) or is formed by a reflective layer (250) resting on a portion of an upper face of the support substrate.

14. The scanner according to one of claims 1 to 13, wherein the mirror (200) comprises silicon.

15. The scanner according to one of claims 1 to 14, wherein the light radiation that could be emitted by the light source (300) has a wavelength equal to 1,550 nm.

FIG.1

FIG.2

FIG.3A

FIG.3B

FIG.3C

FIG.4

FIG.5

FIG.6

FIG.7

FIG.8

810

800

820

FIG.9a

830

810

800

820

p↕  l

FIG.9b

840

830

800

820

FIG.9c

820

830

800

840

850

810

FIG.9d

FIG.9e

FIG.9f

FIG.9g

900

FIG.10a

910

810

FIG.10b

830

FIG.10c

100

200

RR

Z'

Y'

210

X'

O

220

RI

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3489716 A
- US 20190107622 A
- FR 3055702

**Littérature non-brevet citée dans la description**

- **SVEN HOLMSTROM et al.** MEMS laser scanners : a review. *Journal of Microelectromechanical Systems,* Avril 2014